# EUROPEAN PATENT APPLICATION

(11) **EP 4 564 567 A1**
(43) Date of publication of application: **04.06.2025**
(21) Application number: 23846155.2
(22) Date of filing: 05.07.2023
(51) Int. Cl.: H01M 50/367, H01M 50/213, H01M 50/244, H01M 50/342, H01M 50/35, H01M 50/505

(54) **BATTERY PACK**

(30) Priority: 26.07.2022 JP 2022118519
(71) Applicant: Panasonic Intellectual Property Management Co., Ltd., Kadoma-shi, Osaka 571-0057 (JP)
(72) Inventor: SHIMIZU, Keisuke, Kadoma-shi, Osaka 571-0057 (JP)
(74) Representative: Novagraaf International SA
(86) International application number: PCT/JP2023/024863
(87) International publication number: WO 2024/024422

(57) **Abstract**

A battery pack includes: a plurality of batteries (30) each of which includes a cap (45) of a sealing body as a positive external terminal on one side of the battery in a Z direction, the battery causing an internal gas to be exhausted from the one side when an internal pressure increases; a first holder (50) that holds the one side of each of the plurality of batteries (30) that are arranged in alignment, the first holder (50) including an opening (52) through which the cap (45) is exposed; and a current collector plate (60) that abuts one surface of the first holder (50), and is connected to the cap (45) while blocking a portion of the opening (52). At least a portion of the one surface of the first holder (50) that abuts the current collector plate (60) includes a groove (53) for exhausting, to an outside of the first holder (50), the internal gas exhausted from the portion of the opening (52) blocked by the current collector plate (60).

## Description

### TECHNICAL FIELD

The present disclosure relates to a battery pack in which a plurality of batteries are housed.

### BACKGROUND ART

A battery pack includes a plurality of batteries housed in an outer case to match the device to be used. In the battery pack, the batteries arranged in alignment are held by a holder, and the batteries are electrically connected to each other by a current collector plate (for example, Patent Literature (PTL) 1).

When thermal runaway occurs in a battery housed in the battery pack due to some abnormality, high-temperature internal gas is exhausted from the battery undergoing thermal runaway. The high-temperature internal gas coming into contact with batteries held in the same holder (hereafter, referred to as "neighboring batteries") may cause thermal runaway in the neighboring batteries, resulting in a sequential occurrence of thermal runaway. Therefore, it is necessary to ensure that the internal gas exhausted from a battery undergoing thermal runaway is exhausted to the outside of the holder without coming into contact with neighboring batteries.

### Citation List

### Patent Literature

[PTL 1] Japanese Unexamined Patent Application Publication No. 2022-002199

### SUMMARY OF THE INVENTION

A battery includes a gas exhaust valve on one side of the battery in the longitudinal direction. With this configuration, the internal pressure of the battery increases during thermal runaway and the gas exhaust valve is activated, exhausting the internal gas from the one side of the battery in the longitudinal direction. On the other hand, an external terminal may be disposed on the one side of the battery in the longitudinal direction. Therefore, an opening is provided in the holder that holds the one side of the battery in the longitudinal direction to expose the external terminal, and a current collector lead of a current collector plate is connected to the external terminal exposed from the opening.

In the configuration described above, when the internal gas of the battery is exhausted, the internal gas is exhausted through the opening of the holder. However, since the current collector lead of the current collector plate partially blocks the opening, the exhausted gas may be partially obstructed by the current collector lead. In recent years, increased size and output in batteries have led to more wide-shaped current collector leads, so that the above trend has become more pronounced.

At the portion of the opening of the holder where the exhaust gas is obstructed by the current collector lead, the exhaust of the internal gas to the outside of the holder is inhibited. As a result, high-temperature internal gas may flow into the holder and come into contact with the neighboring batteries, which may cause thermal runaway in neighboring batteries and lead to a sequential occurrence of thermal runaway.

In view of the above, an object of the present disclosure is to provide a battery pack that is relatively easy to exhaust, to the outside of the holder, high-temperature internal gas exhausted from a battery when thermal runaway occurs in the battery.

A battery pack according to the present disclosure includes: batteries, a holder, and a current collector plate. Each of the batteries includes an external terminal on one side of the battery in a longitudinal direction. An internal gas is exhausted from the one side when an internal pressure increases. The holder holds the one side of each of the batteries that are arranged in alignment. The holder includes an opening through which the external terminal is exposed. The current collector plate abuts one surface of the holder, and is connected to the external terminal while blocking a portion of the opening. At least a portion of the one surface of the holder that abuts the current collector plate includes a groove for exhausting, to an outside of the holder, the internal gas exhausted from the portion of the opening blocked by the current collector plate.

With the battery pack according to the present disclosure, it is relatively easy to exhaust, to the outside of the holder, high-temperature internal gas exhausted from a battery when thermal runaway occurs in the battery.

### BRIEF DESCRIPTION OF THE DRAWINGS

[FIG. 1] FIG. 1 is a perspective view of a battery pack according to an example of an embodiment.
[FIG. 2] FIG. 2 is a cross-sectional view of the battery pack according to the example of the embodiment.
[FIG. 3] FIG. 3 is a cross-sectional view of a battery according to an example of the embodiment.
[FIG. 4] FIG. 4 is a perspective view of a holder according to an example of the embodiment.
[FIG. 5] FIG. 5 is a perspective view of a holder according to another example of the embodiment.

### DESCRIPTION OF EMBODIMENT

An exemplary embodiment of the present disclosure will be described in detail below. In the following description, specific shapes, materials, directions, numerical values, etc. are examples shown to facilitate understanding of the present disclosure, and may be changed as appropriate to suit uses, purposes, specifications, and the like.

### <Battery Pack>

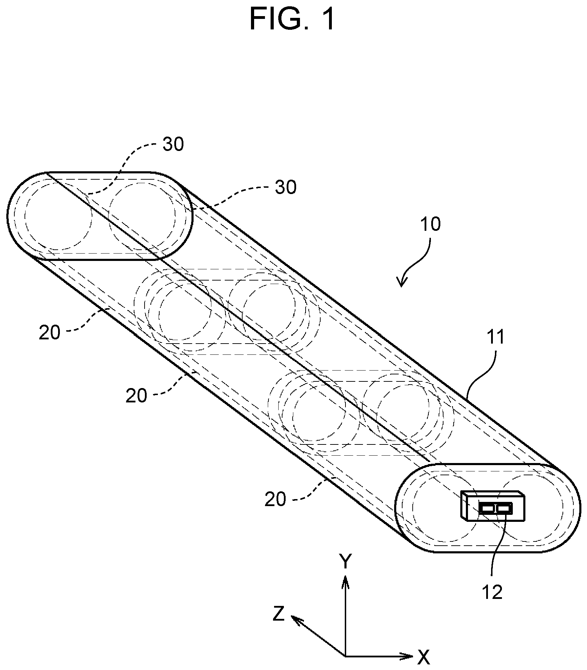

Battery pack 10 according to an example of an embodiment will be described with reference to FIG. 1.

In battery pack 10, a plurality of battery blocks 20 are housed in outer case 11 to match the device to be used. In each battery block 20, a plurality of batteries 30 (two batteries 30 in the example illustrated in FIG. 1) are fixed to each other by the holder and housed in outer case 11. With battery pack 10, it is relatively easy to exhaust, to the outside of the holder, the high-temperature internal gas exhausted from battery 30 when thermal runaway occurs in battery 30, as described in detail below.

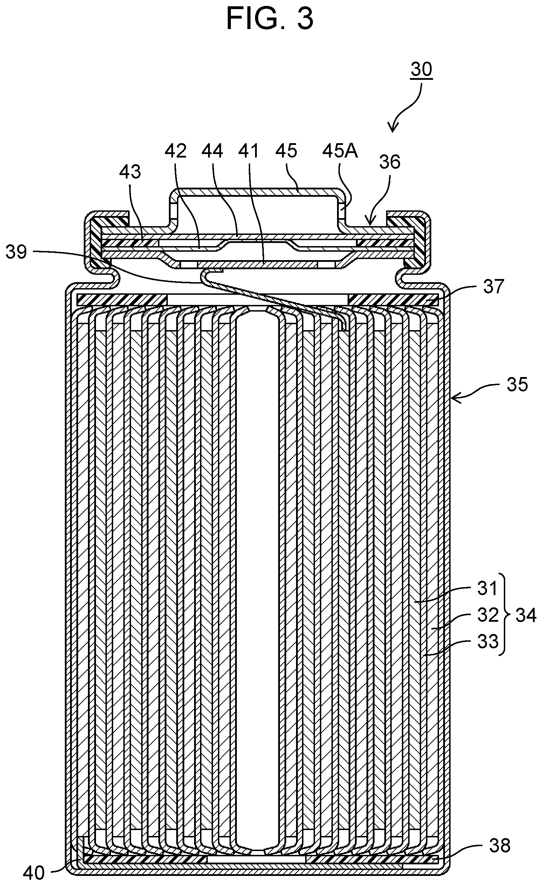

In the following description, each structural element will be described with the longitudinal direction of battery 30 as a Z direction, the direction that is orthogonal to the Z direction and in which batteries 30 are aligned in battery block 20 as an X direction, and the direction that is orthogonal to the Z direction and the X direction as a Y direction. In the Z direction, the side on which cap 45 (see FIG. 3) as a positive external terminal of battery 30 which is the top plate of sealing body 36 (see FIG. 3) is disposed is defined as one side, and the side opposite to the one side is defined as the other side.

Battery pack 10 is mainly used as a motive power source. Battery pack 10 is used, for example, as a power source for an electric device driven by a motor, such as an electric vehicle, an electric power tool, an electric power-assisted bicycle, an electric motorcycle, an electric wheelchair, an electric tricycle, or an electric cart. However, the application of battery pack 10 is not limited to the above examples, and may be used as a power source for various electric devices used indoors and outdoors other than the motor-driven electric devices, such as a cleaner, a wireless device, a lighting device, a digital camera, or a video camera.

Battery pack 10 includes: battery blocks 20 each of which houses a plurality of batteries 30; and outer case 11 that houses a plurality of battery blocks 20 (three battery blocks 20 in the example illustrated in FIG. 1).

Each battery block 20 includes a plurality of batteries 30 arranged in alignment. Battery pack 10 includes a plurality of battery blocks 20 connected in series or parallel to output voltage corresponding to the device to be used. In battery block 20, batteries 30 are electrically connected to each other. In battery block 20, batteries 30 are connected to each other in series or in parallel. In battery block 20 according to the present embodiment, for example, batteries 30 are connected in parallel. Details of battery blocks 20 and batteries 30 will be described below.

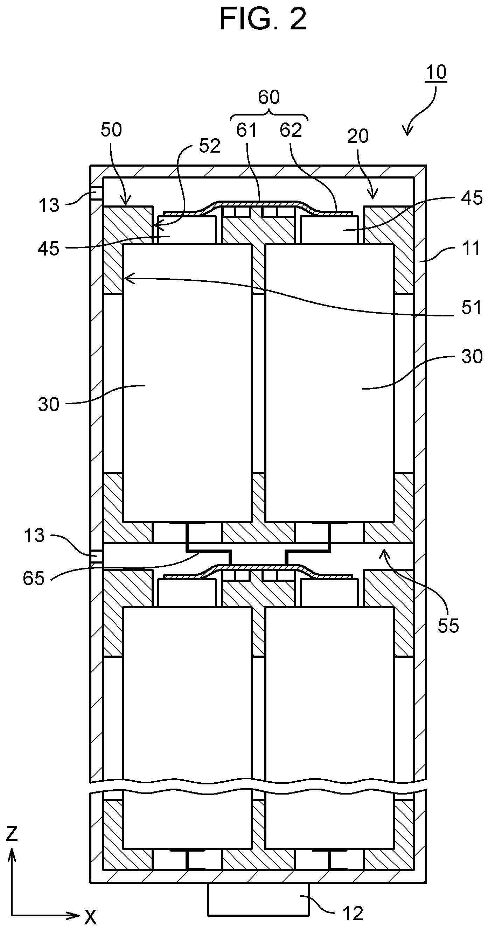

Outer case 11 is made of metal, such as aluminum, and is cylindrical in shape. Outer case 11 is not limited to metal, but may be made of resin. The end of outer case 11 on the other side in the Z direction includes pack external terminal 12 that is electrically connected to battery block 20. Pack external terminal 12 is used as a terminal for supplying DC voltage when battery pack 10 is mounted on a device that is used with battery pack 10 mounted. Pack external terminal 12 is also used to charge battery pack 10. A lateral side of outer case 11 includes exhaust hole 13 (see FIG. 2) for exhausting, to the outside of battery pack 10, the high-temperature internal gas exhausted from battery 30 undergoing thermal runaway .

### <Battery Block>

Battery block 20 according to an example of the embodiment will be described with reference to FIG. 2.

Battery block 20 includes two batteries 30, first holder 50, current collector plate 60, second holder 55, and current collector lead 65. First holder 50 is a holder that holds one side of each battery 30 in the Z direction. Current collector plate 60 abuts one surface of first holder 50, and is connected to caps 45 each of which is the top plate of sealing body 36 (see FIG. 3) as a positive external terminal of battery 30 described below. Second holder 55 is a holder that holds the other side of each battery 30 in the Z direction. Current collector lead 65 is connected to the bottom portion of outer can 35 (see FIG. 3) as a negative external terminal of each battery 30. Of battery blocks 20 connected in series in battery pack 10, current collector plate 60 of battery block 20 positioned closest to the one side in the Z direction corresponds to the total positive charge. Current collector lead 65 of battery block 20 closest to the other side in the Z direction corresponds to the total negative charge. Current collector plate 60 and current collector leads 65 are electrically connected to pack external terminal 12 (not illustrated). Details of battery 30, first holder 50, and current collector plate 60 will be described below.

### <Battery>

Battery 30 according to an example of the embodiment will be described with reference to FIG. 2 and FIG. 3.

Battery 30 is a cylindrical battery, and is a lithium-ion battery. Battery 30 is not limited to a cylindrical battery, but may also be a prismatic battery, laminated battery, or the like. Battery 30 may be an aqueous battery or a non-aqueous battery. A lithium-ion battery is preferably used as an example of the non-aqueous battery.

As illustrated in FIG. 3, battery 30 includes, on the one side in the Z direction, cap 45 as a positive external terminal which is the top plate of sealing body 36, as described in detail below. When internal gas is generated in battery 30 during thermal runaway and the internal pressure increases, the internal gas is exhausted through exhaust hole 45A of cap 45. In other words, in battery 30, the internal gas is exhausted from the one side in the Z direction when the internal pressure increases.

Battery 30 includes electrode body 34, an electrolyte (not illustrated), and outer can 35 that houses electrode body 34 and the electrolyte. Electrode body 34 includes positive electrode 31, negative electrode 32, and separator 33, and has a wound structure in which positive electrode 31 and negative electrode 32 are spirally wound via separator 33. Outer can 35 has a bottomed cylindrical shape in which an opening is provided on the one side in the Z direction. The opening of outer can 35 is blocked by sealing body 36.

Battery 30 includes insulating plates 37 and 38 that are respectively positioned above and below electrode body 34. In the example illustrated in FIG. 3, positive electrode lead 39 attached to positive electrode 31 extends toward sealing body 36 through a through-hole of insulating plate 37, and negative electrode lead 40 attached to negative electrode 32 extends over the outside of insulating plate 38 at the bottom portion of outer can 35. Positive electrode lead 39 is connected by welding or the like to the lower surface of internal terminal plate 41, which is the bottom plate of sealing body 36. Cap 45, which is the top plate of sealing body 36 electrically connected to internal terminal plate 41, serves as a positive external terminal. Negative electrode lead 40 is connected to the inner surface of the bottom portion of outer can 35 by welding or the like, and the bottom portion of outer can 35 serves as a negative external terminal.

Sealing body 36 includes a stacked structure of internal terminal plate 41, lower valve body 42, insulating member 43, upper valve body 44, and cap 45, in order from the electrode body 34 side. Each structural element of sealing body 36 has a disk or ring shape, for example, and the structural elements excluding insulating member 43 are electrically connected to each other. The central portions of lower valve body 42 and upper valve body 44, which form a so-called gas exhaust valve, are connected to each other, and insulating member 43 is interposed between the peripheral portions of lower valve 42 and upper valve 44.

In the gas exhaust valve, when the internal pressure increases during thermal runaway of battery 30, lower valve body 42 deforms to push upper valve body 44 up toward cap 45 and breaks. This blocks the current path between lower valve body 42 and upper valve body 44. When the internal pressure further increases, upper valve body 44 breaks, so that the internal gas is exhausted through exhaust hole 45A provided in the lateral surface of the protrusion of cap 45. However, the configuration is not limited to the present embodiment, and it may be that a gas exhaust valve is provided in the bottom portion of outer can 35 that is the other side in the Z direction, and the internal gas is exhausted from the other side in the Z direction when the internal pressure increases.

### <Holder>

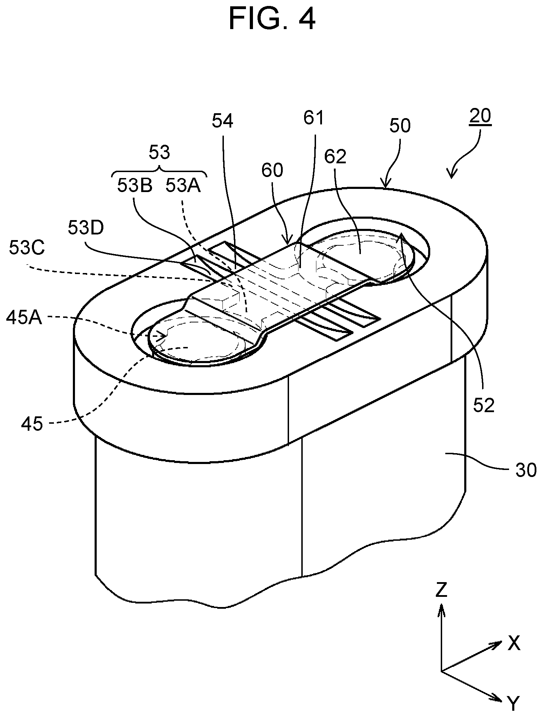

First holder 50 and current collector plate 60 according to an example of the embodiment will be described with reference to FIG. 2 and FIG. 4.

First holder 50 holds the one side of each of two batteries 30 in the Z direction, as described above. The number of batteries 30 held by first holder 50 is not limited to the present embodiment.

First holder 50 may be made of, for example, a high thermal conductivity PPS (polyphenylene sulfide) resin, a resin containing a heat dissipation filler, or an injection moldable thermosetting resin. More specifically, first holder 50 may be made of phenolic resin, unsaturated polyester, or unsaturated polyester mixed with a heat-absorbing agent. First holder 50 may be made of an inorganic mineral such as mica, or a resin material mixed with an inorganic mineral such as mica.

As illustrated in FIG. 4, first holder 50 has an oval shape viewed from the Z direction, and has a predetermined thickness in the Z direction. First holder 50 includes housing portion 51 (see FIG. 2) that houses batteries 30, openings 52 each of which exposes cap 45 as a positive external terminal of battery 30, and grooves 53 that allow the internal gas to be exhausted to the outside of first holder 50 when the internal pressure of battery 30 increases. Details of grooves 53 will be described below.

As illustrated in FIG. 2, housing portion 51 is disposed on the surface of first holder 50 on the other side in the Z direction. Housing portion 51 is circular in shape when viewed from the other side in the Z direction, and is recessed when viewed from the X direction or the Y direction. The end portion of battery 30 on the one side in the Z direction is fitted to housing portion 51, so that the one side of battery 30 is held in place.

As illustrated in FIG. 2 and FIG. 4, each opening 52 penetrates through housing portion 51. More precisely, opening 52 is a circular hole with a diameter smaller than the circular diameter of housing portion 51 when viewed from the other side in the Z direction. However, the center of housing portion 51 and the center of opening 52 coincide with each other. Opening 52 allows cap 45 as the positive external terminal of battery 30 which is the top plate of sealing body 36 to be exposed, so that cap 45 and current collector plate 60 are connected to each other. In addition, opening 52 allows high-temperature internal gas exhausted from battery 30 during thermal runaway of battery 30 to be exhausted to the outside of first holder 50.

### <Current Collector Plate>

As illustrated in FIG. 4, current collector plate 60 abuts one surface of first holder 50 on the one side in the Z direction, and is connected to cap 45 as the positive external terminal of battery 30. More specifically, current collector plate 60 connects caps 45 as the positive external terminals of batteries 30 held in first holder 50 to each other. Current collector plate 60 is made of, for example, a metal plate, such as an aluminum plate, or a copper plate. Current collector plate 60 includes body 61 that abuts the one surface of first holder 50, and current collector leads 62 that are connected to caps 45.

Here, among two batteries 30, opening 52 that exposes cap 45 as the positive external terminal of first battery 30 is defined as first opening 52, and opening 52 that exposes cap 45 as the positive external terminal of second battery 30 is defined as second opening 52. In this case, body 61 abuts the one surface of first holder 50 between first opening 52 and second opening 52 of first holder 50. Body 61 is connected to, for example, current collector leads 65 connected to the negative terminals of another battery block 20 (not illustrated). Current collector leads 62 are formed continuously with body 61 at both ends of body 61 in the X direction, and are electrically connected to caps 45 by being welded and joined to caps 45.

When the internal pressure of battery 30 increases during thermal runaway of battery 30, the internal gas is exhausted from exhaust hole 45A of cap 45 and then exhausted from opening 52 of first holder 50. However, since opening 52 is partially blocked by current collector lead 62 of current collector plate 60, the internal gas to be exhausted may be partially obstructed by current collector lead 62.

In the portion where the exhaust of the internal gas is obstructed by current collector lead 62, the exhaust of the internal gas to the outside of first holder 50 is inhibited. Therefore, high-temperature internal gas may flow into first holder 50 and come into contact with neighboring battery 30 held inside first holder 50, which may cause thermal runaway in neighboring battery 30 and lead to a sequential occurrence of thermal runaway. In view of the above, in the present embodiment, in the portion where the exhaust of the internal gas is obstructed by current collector lead 62, the internal gas is exhausted to the outside of first holder 50 by grooves 53 described below.

### <Groove>

Grooves 53 are provided in the one surface of first holder 50 on the one side in the Z direction. Grooves 53 are provided in the one surface of first holder 50 on the one side in the Z direction, at the portion that abuts at least current collector plate 60. Grooves 53 being provided at the portion that abuts current collector plate 60 means that grooves 53 are provided at the portion where the one surface of first holder 50 overlaps with current collector plate 60 when viewed from the one side. Moreover, grooves 53 being provided at the portion that abuts at least current collector plate 60 includes the case where grooves 53 are provided only at the portion that abuts current collector plate 60, and the case where grooves 53 are provided at both the portion that abuts current collector plate 60 and the portion that does not abut current collector plate 60. More specifically, groove 53 communicatively connects the portion of opening 52 blocked by current collector lead 62 with the portion of the one surface of first holder 50 that does not abut current collector plate 60. The portion of opening 52 blocked by current collector lead 62 is the space in opening 52, between current collector lead 62 and cap 45.

More specifically, groove 53 includes first straight portion 53A that extends in the X direction and second straight portion 53B that extends in the Y direction.

First straight portion 53A is covered by current collector plate 60, and extends in a straight line along the X direction from the portion of opening 52 blocked by current collector lead 62 to terminal end portion 54. Terminal end portion 54 is positioned between first opening 52 and second opening 52, and abuts current collector plate 60. In other words, it can be said that first straight portion 53A extends in a straight line along the X direction from the periphery of first opening 52 to terminal end portion 54. Moreover, it can be said that first straight portion 53A extends in a straight line along the X direction from the periphery of second opening 52 to terminal end portion 54. Here, for example, when the internal gas is exhausted from first battery 30, the internal gas is led to first straight portion 53A. Since terminal end portion 54 is provided between first opening 52 and second opening 52, the internal gas led to first straight portion 53A is exhausted to the outside of first holder 50 without contacting second battery 30 through second opening 52.

Second straight portion 53B is in communication with first straight portion 53A, and extends in a straight line along the Y direction from terminal end portion 54 of first straight portion 53A. Middle portion 53C of second straight portion 53B is covered by current collector plate 60, and both ends 53D of second straight portion 53B are exposed from current collector plate 60. The cross-sectional shape, length, width, and the number and the like of grooves 53 are not limited to the present embodiment.

With grooves 53, the internal gas exhausted from battery 30 during thermal runaway of battery 30 is exhausted to the outside of first holder 50 without being obstructed by current collector lead 62. This prevents the internal gas from flowing into first holder 50 when thermal runaway occurs in one of batteries 30 in battery block 20, and prevents thermal runaway from occurring in neighboring battery 30 held inside first holder 50. In other words, it is easy to avoid a sequential occurrence of thermal runaway.

The position at which groove 53 is provided is not limited to the present embodiment. For example, in the configuration in which a gas exhaust valve is provided in the bottom portion of outer can 35 that is the other side in the Z direction and the internal gas is exhausted from the other side in the Z direction when the internal pressure increases, second holder 55 may include grooves 53.

### <Conclusion>

Battery pack 10 according to the present disclosure includes: batteries 30, first holder 50 (holder), and current collector plate 60. Each of batteries 30 includes, on one side of the battery in the Z direction (longitudinal direction), cap 45 (external terminal) as a positive external terminal that is the top plate of sealing body 36. Internal gas is exhausted from exhaust hole 45A of cap 45 when the internal pressure increases. First holder 50 holds the one side of each of batteries 30 that are arranged in alignment. First holder 50 includes opening 52 through which cap 45 is exposed. Current collector plate 60 abuts one surface of first holder 50, and is connected to cap 45 while blocking a portion of opening 52. At least a portion of the one surface of first holder 50 that abuts current collector plate 60 includes groove 53 for exhausting, to the outside of first holder 50, the internal gas exhausted from the portion of opening 52 blocked by current collector plate 60.

With the configuration above, the internal gas exhausted from battery 30 during thermal runaway of battery 30 passes through groove 53 and is exhausted to the outside of first holder 50 without being obstructed by current collector lead 62. This prevents high-temperature internal gas from flowing into first holder 50 when thermal runaway occurs in one of batteries 30 in battery block 20. Therefore, it is possible to prevent the high-temperature internal gas from flowing into first holder 50 and coming into contact with neighboring battery 30 held inside first holder 50, and preventing thermal runaway from occurring in neighboring battery 30 held inside first holder 50. In other words, it is easy to avoid a sequential occurrence of thermal runaway.

### <Other Embodiments>

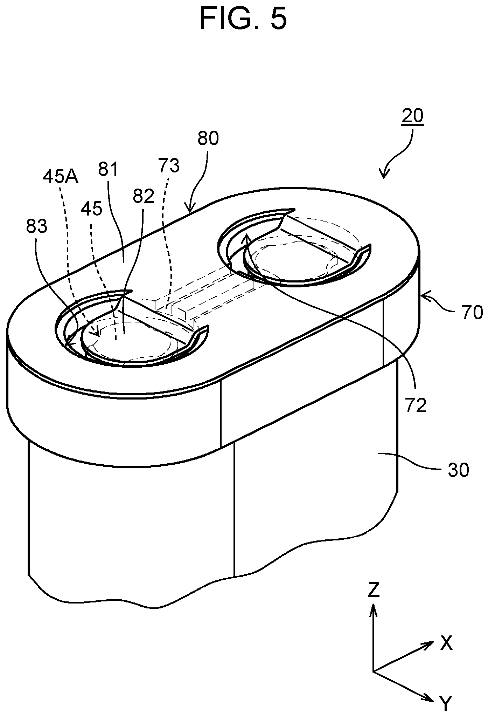

First holder 70 and current collector plate 80 according to another example of the embodiment will be described with reference to FIG. 5.

As illustrated in FIG. 5, first holder 70 includes a housing portion (not illustrated), openings 72, and grooves 73 for exhausting the internal gas to the outside of first holder 70 when the internal pressure of battery 30 increases. Since the housing portion and openings 72 are the same as housing portion 51 and openings 52 of first holder 50 described above, the descriptions of the housing portion and openings 72 are omitted. Details of grooves 73 will be described below.

Current collector plate 80 abuts one surface of first holder 70, and is connected to caps 45 as the positive external terminals of batteries 30. More specifically, current collector plate 80 connects caps 45 as the positive external terminals of batteries 30 held in first holder 70 to each other. Current collector plate 80 is made of a metal plate, such as an aluminum plate, or a copper plate. Current collector plate 80 includes body 81 that abuts the one surface of first holder 70 on the one side in the Z direction, and current collector leads 82 that are connected to caps 45.

Body 81 has a shape that is approximately identical to the oval shape of first holder 70 viewed from the Z direction, and abuts the one surface of first holder 70. Body 81 includes openings 83 at the positions corresponding to openings 72 of first holder 70. Body 81 is also connected to, for example, current collector leads 65 that are connected to the negative terminal of another battery block 20. However, the shape, size, and the like of body 81 are not limited to the present embodiment, and may be any shape, size, and the like as long as body 81 at least includes openings 72 in the one surface of first holder 70.

Each current collector lead 82 extends from the edge of opening 83, and is electrically connected to cap 45 by being welded and joined to cap 45. Respective current collector leads 82 extend from the edges of openings 83 at the same phase position. In the present embodiment, each of current collector leads 82 extends from the edge of opening 83 on one side in the X-direction.

A plurality of grooves 73 (two grooves 73 in the example illustrated in FIG. 5) are provided in the one surface of first holder 70 on the one side in the Z direction. Each groove 73 is provided in the portion of the one surface of first holder 70 that abuts current collector plate 80. Each groove 73 communicatively connects the portion of opening 72 blocked by current collector lead 82 with the portion of adjacent opening 72 that is not blocked by current collector plate 80.

Grooves 73 allow the internal gas exhausted from battery 30 during thermal runaway of battery 30 to be discharged to the outside of first holder 70 through adjacent opening 72 without being obstructed by current collector lead 82. This prevents a sequential occurrence of thermal runaway caused by, when thermal runaway occurs in one of batteries 30 in battery block 20, high-temperature internal gas flowing into first holder 70 and coming into contact with neighboring battery 30 held inside first holder 50 leading to the occurrence of thermal runaway in neighboring battery 30 held inside first holder 50.

The present disclosure is not limited to the foregoing exemplary embodiment and variations, but various other modifications and alterations are of course possible within the scope of the claims of the present application.

### REFERENCE MARKS IN THE DRAWINGS

- 10: battery pack
- 11: outer case
- 12: pack external terminal
- 13: exhaust hole
- 20: battery block
- 30: battery
- 31: positive electrode
- 32: negative electrode
- 33: separator
- 34: electrode body
- 35: outer can
- 36: sealing body
- 37: insulating plate
- 38: insulating plate
- 39: positive electrode lead
- 40: negative electrode lead
- 41: internal terminal plate
- 42: lower valve body
- 43: insulating member
- 44: upper valve body
- 45: cap (positive electrode external terminal)
- 45A: exhaust hole
- 50: first holder
- 51: housing portion
- 52, 72, 83: opening
- 53: groove
- 53A: first straight portion
- 53B: second straight portion
- 54: terminal end portion
- 55: second holder
- 60: current collector plate
- 61: body
- 62, 65, 82: current collector lead
- 70: first holder
- 73: groove
- 80: current collector plate
- 81: body

## Claims

1. A battery pack comprising:
a plurality of batteries each of which includes an external terminal on one side of the battery in a longitudinal direction of the battery, the battery causing an internal gas to be exhausted from the one side when an internal pressure increases;
a holder that holds the one side of each of the plurality of batteries that are arranged in alignment, the holder including an opening through which the external terminal is exposed; and
a current collector plate that abuts one surface of the holder, and is connected to the external terminal while blocking a portion of the opening,
wherein at least a portion of the one surface of the holder that abuts the current collector plate includes a groove for exhausting, to an outside of the holder, the internal gas exhausted from the portion of the opening blocked by the current collector plate.

2. The battery pack according to claim 1,
wherein the groove communicatively connects the portion of the opening blocked by the current collector plate with a portion of the one surface of the holder that does not abut the current collector plate.

3. The battery pack according to claim 1,
wherein the groove communicatively connects the portion of the opening blocked by the current collector plate with a portion of an adjacent opening that is not blocked by the current collector plate, the adjacent opening being adjacent to the opening.
